# EUROPÄISCHE PATENTSCHRIFT

(11) **EP 4 071 011 B1**
(45) Veröffentlichungstag und Bekanntmachung des Hinweises auf die Patenterteilung: **02.10.2024**
(21) Anmeldenummer: 22154992.6
(22) Anmeldetag: 03.02.2022
(51) Int. Cl.: B60T 8/88, B60T 13/74

(54) **BREMSSYSTEM FÜR EIN AUTONOMES FAHRZEUG**
BRAKING SYSTEM FOR AN AUTONOMOUS VEHICLE
SYSTÈME DE FREINAGE POUR UN VÉHICULE AUTONOME

(30) Priorität: 06.04.2021 DE 102021108523
(43) Veröffentlichungstag der Anmeldung: 12.10.2022
(73) Patentinhaber: Audi AG, 85045 Ingolstadt (DE)
(72) Erfinder: Brok, Tobias, 85092 Kösching (DE); Macorig, Simone, 59302 Oelde (DE)

(56) Entgegenhaltungen:
- WO-A1-2019/058204
- DE-A1- 102016 012 617
- DE-A1- 102017 204 157
- DE-A1- 102018 222 313
- US-A1- 2018 215 368

## Beschreibung

Die Erfindung betrifft ein Bremssystem in einem zumindest teilweise autonomen Fahrzeug nach dem Oberbegriff des Anspruches 1.

Bei einem zumindest teilweise autonomen Fahrzeug muss das Bremssystem für einen autonomen Bremsdruckaufbau sowie für eine autonome Fahrerassistenzregelung (zum Beispiel ABS- oder ESP-Funktionen) ausgelegt sein. Je nach Systemausprägung muss das Bremssystem im Fehlerfall sowohl Brems- als auch Lenkaufgaben wahrnehmen und das Fahrzeug automatisch sicher zum Stillstand bringen und im Stillstand halten. Dazu ist das Bremssystem mit einem Primär-Bremsregelsystem und einem redundanten Sekundär-Bremsregelsystem ausgestattet.

In einem gattungsgemäßen Bremssystem ist an einer ersten Fahrzeugachse, insbesondere Vorderachse, je Fahrzeugrad ein Hydraulik-Aktuator zur Betätigung der Fahrzeugbremse bereitgestellt. Jeder der Hydraulik-Aktuatoren ist sowohl dem Primär-Bremsregelsystem als auch dem Sekundär-Bremsregelsystem zugeordnet.

Im Stand der Technik ist das Sekundär-Bremsregelsystem im Vergleich zum Primär-Bremsregelsystem mit einer reduzierten Funktionalität ausgestattet. Daher ist im Bremssystem-Fehlerfall der Einsatz von hochautomatisierten Fahrfunktionen lediglich bei zum Beispiel querdynamisch wenig anspruchsvollen Fahrbedingungen ermöglicht. So ist der Einsatz auf Autobahnabschnitten zwar möglich. Dabei sind jedoch Einschränkungen durch den Kurvenradius von Autobahnen, der möglichst groß sein muss, oder durch gute Fahrbahnverhältnisse gegeben. Ebenso sind die Funktionen hinsichtlich der Maximalgeschwindigkeit eingeschränkt. Die Maximalgeschwindigkeit des automatisierten Fahrens des Levels 3 oder 4 beträgt 130 km/h während des Normalbetriebs. Bei Nutzung des Sekundär-Bremsregelsystems ist dagegen die Maximalgeschwindigkeit aktuell auf 80 km/h begrenzt. Zudem ist in aktuellen Fahrzeugen die Parksperren-Funktion in der Getriebestruktur des Fahrzeugs in bauteiltechnisch einfacher Weise integriert.

Aus der DE 10 2011 103 541 A1 ist ein Verfahren zum Steuern eines regenerativen und hydraulischen Bremsens bekannt. Aus der DE 10 2005 037 382 A1 ist ein Verfahren zum Betreiben eines Bremsregelsystems bekannt. Aus der DE 10 2011 103 540 A1 ist ein Verfahren zum Steuern eines regenerativen und hydraulischen Bremsens bekannt.

In den Dokumenten DE 10 2016 012 617 A1, DE 10 2017 204157 A1, WO 2019/058204 A1, DE 10 2018 222313 A1 und US 2018/215368 A1 sind redundante Bremsregelsysteme offenbart, die für den Notbetrieb in einem zumindest teilweise autonomen Fahrzeug geeignet sind.

Die Aufgabe der Erfindung besteht darin, ein Bremssystem in einem zumindest teilweise autonomen Fahrzeug bereitzustellen, dessen Sekundär-Bremsregelsystem im Vergleich zum Stand der Technik eine gesteigerte Funktionalität aufweist.

Die Aufgabe ist durch die Merkmale des Anspruches 1 gelöst. Bevorzugte Weiterbildungen der Erfindung sind in den Unteransprüchen offenbart.

Die Erfindung geht von einem Bremssystem in einem zumindest teilweise autonomen Fahrzeug aus, das eine Fahrzeugrad-Bremse je Fahrzeugrad sowie ein Primär-Bremsregelsystem und ein redundanten Sekundär-Bremsregelsystem aufweist. An einer ersten Fahrzeugachse, insbesondere Vorderachse, ist je Fahrzeugrad ein Hydraulik-Aktuator zur Betätigung der Fahrzeugbremse bereitgestellt. Jeder Hydraulik-Aktuator ist sowohl dem Primär-Bremsregelsystem als auch dem Sekundär-Bremsregelsystem zugeordnet, das heißt in Signalverbindung mit den beiden Bremsregelsystemen. Gemäß dem kennzeichnenden Teil des Anspruches 1 ist an der anderen Fahrzeugachse, insbesondere Hinterachse, je Fahrzeugrad ein elektromechanischer, das heißt hydraulikfrei arbeitender Primär-Aktuator und ein elektromechanischer Sekundär-Aktuator bereitgestellt. Der Primär-Aktuator ist dem Primär-Bremsregelsystem zugeordnet, während der Sekundär-Aktuator dem Sekundär-Bremsregelsystem zugeordnet ist.

Die Erfindung betrifft daher allgemein den Aufbau einer hybriden Systemtopologie als Bremssystem, bei dem die eine Fahrzeugachse (insbesondere Vorderachse) nass (das heißt mit Hydraulikkomponenten) abgebremst wird, wohingegen die andere Fahrzeugachse (insbesondere Hinterachse) trocken mittels elektromechanischer Bremsen abgebremst wird.

Die Erfassung des Fahrerbremswunsches kann über eine Fußpedalsimulator-Einheit durchgeführt werden. In diesem Fall ist keine hydraulische Rückfallebene vorhanden. Der Fahrer ist somit vom Bremssystem gänzlich entkoppelt und nicht Teil der Rückfallebene. Die elektrischen Signale des Fußpedalsimulators können an sowohl das Primär-Steuergerät als auch an das Sekundär-Steuergerät gesendet werden. Diese verarbeiten das Signal und steuern die Aktuatoren an. Die elektrische Versorgung der Steuergeräte kann über ein redundantes Bordnetz und eine redundante Verkabelung sichergestellt werden.

Die Ansteuerung der Aktuatoren kann ebenso über eine verzweigte Verkabelung abgesichert werden. So kann jeweils ein Steuergerät mit einem elektromechanischen Aktuator an einem Rad der Hinterachse verbunden sein. Mit den Hydraulik-Aktuatoren zum Druckaufbau an der Vorderachse ist jeweils ein Steuergerät über ein Kabel zur Übertragung eines Arbeitsstroms verbunden. Die Erfassung der Fahrsituation ist in dieser Systemtopologie ebenso redundant. Das Signal, das die Drehzahlsensoren an einem Rad ermitteln, wird sowohl an das Primär-Steuergerät als auch an das Sekundär-Steuergerät übermittelt. Hierdurch ist eine redundante Signalübertragung gegeben. Weiter können die Steuergeräte über redundante Bus-Leitungen an das Informationsnetz angeschlossen sein, das ebenso über eine doppelte Ausführung des Bus-Systems verfügt. Zuletzt können die Steuergeräte untereinander über eine doppelte Bus-Leitung miteinander vernetzt sein.

In einer bevorzugten Ausführungsvariante kann die Fahrzeug-Vorderachse des Systems nass (das heißt mittels Hydraulik-Aktuatoren) abgebremst werden. Hierfür sind an der Fahrzeug-Vorderachse zwei Hydraulik-Aktuatoren integriert, die zum Beispiel als Pumpen ausgebildet sind. Jeweils ein Hydraulik-Aktuator ist über eine Bremsdruckleitung mit einem Bremssattel an der Vorderachse verbunden. Ebenso sind können die beiden Hydraulik-Aktuatoren über zwei Bremsdruckleitungen miteinander verbunden sein. Innerhalb der Aktuatorik ist eine einfache hydraulische Schaltung integriert. Bei Ausfall des einen Hydraulik-Aktuators kann mit Hilfe der hydraulischen Schaltung der andere noch funktionsfähige Hydraulik-Aktuator die Brems- und/oder Lenkaufgaben an der Fahrzeugachse übernehmen.

Durch den erfindungsgemäßen Aufbau eines hybriden Bremssystems kann eine im Vergleich zum Stand der Technik wesentlich leistungsfähigere Rückfallebene erreicht werden. Die Vernetzung der Systemkomponenten ermöglicht auch in einem Fehlerfall die Querstabilisierung des Fahrzeugs bei Untersteuern. Die verbesserte Dynamik ermöglicht insgesamt eine höhere Verzögerung im Fehlerfall. Zudem kann auf eine (zum Beispiel in einem Gangschalt-Getriebe integrierte) Parksperre verzichtet werden. Anstelle dessen kann die Parksperren-Funktion von den elektromechanischen Aktuatoren übernommen werden.

Nachfolgend ist eine bevorzugte technische Umsetzung der Erfindung beschrieben, bei der die Hydraulik-Aktuatoren in der Fahrzeug-Vorderachse integriert sind. Die Erfindung ist jedoch nicht auf diese Umsetzung beschränkt. Anstelle dessen können die Hydraulik-Aktuatoren auch in der Fahrzeug-Hinterachse integriert sein, während die elektromechanischen Aktuatoren in der Fahrzeug-Vorderachse integriert sind: In der technischen Umsetzung kann das Primär-Bremsregelsystem der hybriden Systemtopologie den Signaleingang der Fußpedalsimulator-Einheit zur Verarbeitung des Fahrerbremswunsches nutzen. Hierfür können zur Signalerzeugung in der Fußpedalsimulator-Einheit ein Druck- und ein Wegsensor integriert sein. Die Primär- und Sekundär-Steuergeräte können im Normalfall beiderseits dieses Signal verarbeiten. Die Ansteuerung der Aktuatoren erfolgt ebenso simultan über das Primär-Steuergerät und über das Sekundär-Steuergerät. Jeweils ein Steuergerät kann dabei zwei elektromechanische Aktuatoren an der Hinterachse ansteuern. Die Hydraulik-Aktuatoren für die Vorderachse können jeweils von einem Steuergerät angesteuert werden.

Aufgrund des erfindungsgemäßen Aufbaus der Systemtopologie ist auch der Freiheitsgrad gegeben, dass lediglich ein Steuergerät die Hydraulik-Aktuatoren für die Vorderachse ansteuert. Hierdurch kann ein Schiefziehen des Fahrzeugs durch unterschiedliche Latenzzeiten der Übertragung einer Ansteuerung der Steuergeräte und einen dadurch unterschiedlich entstehenden Bremskraftaufbau an den Rädern der Vorderachse vermieden werden.

Die Bremskraftregelung wird an der Vorderachse über ein Vor- und Zurückfahren des Pumpenmotors erreicht. Durch einen abnehmenden Bremsdruck in den Bremsdruckleitungen wird die Spannkraft der Bremssättel reduziert. Zum erneuten Druckaufbau wird der Pumpenmotor wieder vorgefahren. An der Hinterachse wird die Spannkraft durch die elektromechanischen Aktuatoren direkt am Rad erzeugt. Die Bremskraftregelung wird über denselben Mechanismus erreicht. Hierbei wird jedoch keine Bremsflüssigkeit als Medium eingesetzt.

Der Einsatz einer elektromechanischen Bremse fordert zwingend den Einsatz eines Schwimmsattels als Träger der Einheit. Durch das Ausfahren der Spindel des Elektromotors wird der Bremsbelag auf die Bremsscheibe gedrückt. Auf der gegenüberliegenden Seite des Bremssattels wird der Bremsbelag aufgrund der Bauform des Schwimmsattels mit derselben Spannkraft auf die Bremsscheibe gedrückt.

Das Sekundär-Bremsregelsystem ist durch eine doppelte Ausführung von Systemkomponenten abgesichert. Das Primär-Steuergerät sowie Sekundär-Steuergerät können bevorzugt über dieselben Funktionen verfügen. Ebenso ist die Auslegung der elektromechanischen Pumpenmotoren der Vorderachse und die elektromechanischen Aktuatoren der Hinterachse konzipiert. Die Redundanz wird über eine zweite Komponente mit denselben Funktionen abgesichert. Bei Ausfall einer Systemkomponente ist eine zweite Systemkomponente vorhanden, die deren Funktionen übernimmt. So wird bei einem Ausfall des Primär-Steuergeräts das Sekundär-Steuergerät aktiviert. Aufgrund der redundanten Verkabelung wird diese mit denselben Informationen und ausreichender elektrischer Energie versorgt. Das Sekundär-Steuergerät hat die Möglichkeit, die Ansteuerung der Pumpenmotoren an der Vorderachse aufgrund der doppelten Vernetzung eigenständig durchzuführen. Die verbleibenden 50 % der elektromechanischen Aktuatoren an der Hinterachse, die bereits von dem Sekundär-Steuergerät im Betriebsfall angesteuert werden, sind ausreichend, um im Fehlerfall eine sichere Verzögerung des Gesamtfahrzeuges zu garantieren. Bei Ausfall eines elektromechanischen Aktuators an der Hinterachse kann aufgrund der Freiheitsgrade der Systemtopologie eine Anpassung der Bremskraft, wie zum Beispiel das Deaktivieren eines elektromechanischen Aktuators auf der gegenüberliegenden Seite, durchgeführt werden, damit das Fahrzeug weiterhin sicher verzögern kann. Technisch ist diese Funktion mittels Softwareanpassung der Steuergeräte oder Relais realisierbar.

Bei einem Ausfall eines Pumpenmotors kann intern ein stromlos geöffnetes Schaltventil schalten, sodass ein Pumpenmotor im Fehlerfall beide Radbremsen der Vorderachse mit Bremsdruck versorgt. Grundsätzlich kann eine radindividuelle Bremsdruckregelung im Fehlerfall aller Komponenten, bis auf einen Ausfall eines Pumpenmotors, realisiert werden. Bei einem Ausfall eines Pumpenmotors ist eine radindividuelle Einstellung des Bremsdrucks und damit der Bremskraft an der Vorderachse nicht möglich. Bei einem Übersteuern des Fahrzeugs kann keine Querstabilisierung sichergestellt werden, da die Radbremsen der Vorderachse nicht radindividuell abgebremst werden können. Eine Längsstabilisierung ist weiterhin möglich.

Eine Halte-Funktion kann zum einen über das Halten der Position des Pumpenmotors durchgeführt werden. Zum anderen kann über eine konstante Stromversorgung der elektromechanischen Aktuatoren an der Hinterachse eine zusätzliche Haltekraft aufgebracht werden. Das Parken wird mittels einer Sperrklinke in den elektromechanischen Aktuatoren der Hinterachse realisiert. In einer bevorzugten Ausführungsvariante können insgesamt vier Aktuatoren mit vier Sperrklinken verbaut sein, die die Sperrfunktion wahrnehmen können. Auf diese Weise wird stets eine Übertragung der Parkkraft auf zwei Räder garantiert. Eine ausreichende Redundanz ist daher gegeben.

Nachfolgend sind wesentliche Erfindungsaspekte nochmals im Einzelnen dargestellt: So können bevorzugt das Primär-Steuergerät und das Sekundär-Steuergerät baugleich sowie funktionsgleich ausgeführt sein. In gleicher Weise können auch die Primär-Aktuatoren sowie die Sekundär-Aktuatoren baugleich sowie funktionsgleich realisiert sein.

In einer technischen Umsetzung kann das Primär-Bremsregelsystem ein Primär-Steuergerät aufweisen. Auf der Grundlage einer in einem Pilotsystem generierten Soll-Verzögerungsvorgabe und/oder einer mittels eines Bremspedals fahrerseitig generierten Soll-Verzögerungsvorgabe kann das Primär-Steuergerät Primär-Stellsignale erzeugen, mit denen die Hydraulik-Aktuatoren und die elektromechanischen Primär-Aktuatoren ansteuerbar sind. Alternativ und/oder zusätzlich kann das Sekundär-Bremsregelsystem ein Sekundär-Steuergerät aufweisen. Auf der Grundlage einer in dem Pilotsystem generierten Soll-Verzögerungsvorgabe und/oder einer mittels des Bremspedals fahrerseitig generierten Soll-Verzögerungsvorgabe kann Sekundär-Steuergerät Sekundär-Stellsignale erzeugen, mit denen die Hydraulik-Aktuatoren und die elektromechanischen Sekundär-Aktuatoren ansteuerbar sind.

Zur Erhöhung der Prozesssicherheit können die beiden Hydraulik-Aktuatoren über einen Hydraulik-Schaltkreis miteinander verbunden sein. Mit Hilfe des Hydraulik-Schaltkreises kann bei Ausfall des einen Hydraulik-Aktuators der andere, noch funktionsfähige Hydraulik-Aktuator die Brems- und/oder Lenkaufgaben für beide Fahrzeugrad-Bremsen der Fahrzeugsachse übernehmen.

Bevorzugt kann das Bremspedal Bestandteil einer Fußpedalsimulator-Einheit mit zumindest einem Pedalsensor sein. Die Fußpedalsimulator-Einheit kann die mechanische Pedal-Bewegung in ein elektrisches Fußpedal-Signal umwandeln, das die fahrerseitig generierte Soll-Verzögerungsvorgabe ist.

Zur weiteren Erhöhung der Systemsicherheit ist es bevorzugt, wenn ein Primär-Bordnetz und ein redundantes Sekundär-Bordnetz bereitgestellt sind. Diese können voneinander unabhängig jeweils das Primär-Steuergerät und das Sekundär-Steuergerät mit elektrischer Energie versorgen.

In einer technischen Umsetzung kann jedem Fahrzeugrad ein Primär-Drehzahlsensor und ein Sekundär-Drehzahlsensor zugeordnet sein. Der Primär-Drehzahlsensor ist in Signalverbindung mit dem Primär-Steuergerät. In gleicher Weise ist der Sekundär-Drehzahlsensor in Signalverbindung mit dem Sekundär-Steuergerät.

Bevorzugt ist es, wenn das Pilotsystem über eine Primär-Signalleitung mit dem Primär-Steuergerät in Signalverbindung ist. Unabhängig davon kann das Pilotsystem über eine weitere Sekundär-Signalleitung mit dem Sekundär-Steuergerät in Signalverbindung sein.

In einer ersten Ausführungsvariante kann im normalen Fahrbetrieb alleine das Primär-Bremsregelsystem im Einsatz sein, während das Sekundär-Bremsregelsystem deaktiviert ist. Bevorzugt kann das Primär-Steuergerät über eine Verbindungs-Signalleitung mit dem Sekundär-Steuergerät verbunden sein. Über die Verbindungs-Signalleitung können Zustands-Informationen zwischen den beiden Steuergeräten ausgetauscht werden. Sofern im Primär-Steuergerät ein Fehlerfall im Primär-Bremsregelsystem diagnostiziert ist, wird ein Fehlersignal generiert, mit dem über die Verbindungs-Signalleitung das Sekundär-Steuergerät aktivierbar ist. In diesem Fall übernimmt das Sekundär-Bremsregelsystem, anstelle des Primär-Bremsregelsystems, die Umsetzung der Soll-Verzögerungsvorgabe.

In einer alternativen Betriebsweise kann bereits im normalen Fahrbetrieb sowohl das Primär-Bremsregelsystem als auch das Sekundär-Bremsregelsystem im Einsatz sein. In diesem Fall arbeiten daher bereits im normalen Fahrbetrieb die beiden Bremsregelsysteme im Parallelbetrieb.

In einer Weiterbildung der Erfindung kann zumindest einer der elektromechanischen Primär-Aktuatoren sowie zumindest einer der elektromechanischen Sekundär-Aktuatoren jeweils eine Sperrfunktion aufweisen, mittels der in einer Parksituation der Aktor das zugeordnete Fahrzeugrad durch Bremsbetätigung blockiert. Bevorzugt sind sämtliche elektromechanische Aktuatoren mit einer solchen Sperrfunktion ausgestattet.

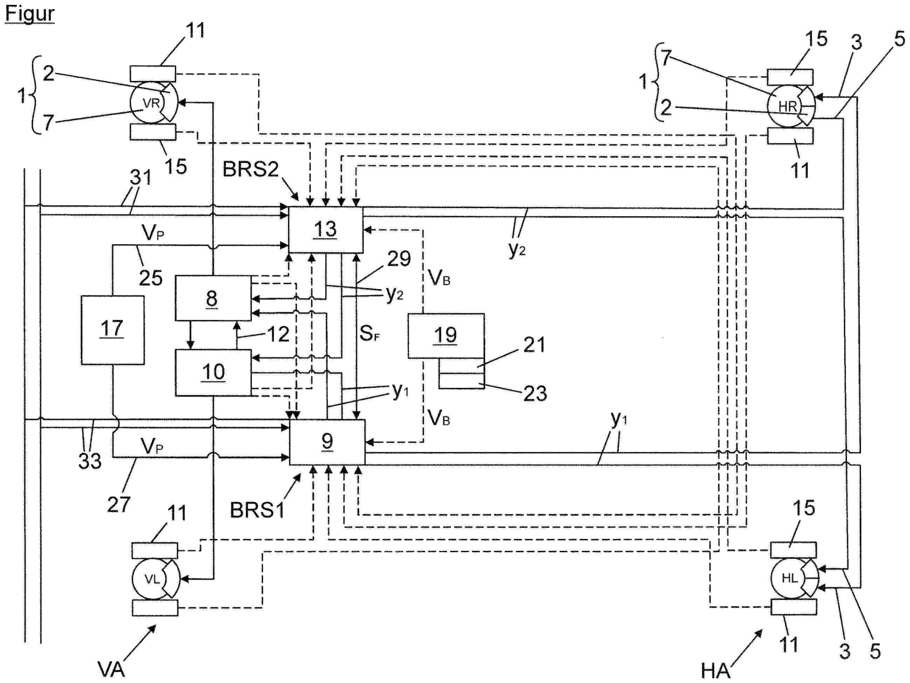

Nachfolgend ist ein Ausführungsbeispiel der Erfindung anhand der beigefügten Figur beschrieben.

In der Figur ist ein schematisches Blockschaltdiagramm des Bremssystems eines zweispurigen autonomen Fahrzeugs mit einer Vorderachse VA und einer Hinterachse HA gezeigt. Demnach ist jedem der beiden Vorderräder VL, VR und jedem der beiden Hinterräder HR, HL jeweils eine Fahrzeugrad-Bremse 1 zugeordnet. Jede der Fahrzeugrad-Bremsen 1 weist einen Bremssattel 2 auf, der mit einer Bremsscheibe 7 der Fahrzeugrad-Bremse 1 zusammenwirkt. Den beiden Fahrzeugrad-Bremsen 1 der Vorderachse VA sind jeweils ein Hydraulik-Aktuator 8, 10 zugeordnet.

Demgegenüber ist an der Hinterachse HA, jedem Hinterrad ein elektromechanischer, das heißt hydraulikfrei arbeitender Primär-Aktuator 3 und ein elektromechanischer Sekundär-Aktuator 5 zugeordnet. Der Primär-Aktuator 3 ist Bestandteil eines Primär-Bremsregelsystems BRS1, während der Sekundär-Aktuator 5 Bestandteil eines Sekundär-Bremsregelsystem BRS2 ist.

Das Primär-Bremsregelsystem BRS1 ist in der Figur aus einem Primär-Steuergerät 9 und den insgesamt zwei elektromechanischen Primär-Aktuatoren 3 an der Hinterachse HA aufgebaut, die jeweils einer Fahrzeugrad-Bremse 1 zugeordnet sind. Zudem ist das Primär-Steuergerät 9 je Fahrzeugrad VL, VR, HR, HL in Signalverbindung mit einem Primär-Drehzahlsensor 11. Ferner ist das Primär-Steuergerät 9 in Signalverbindung mit den beiden Hydraulik-Aktuatoren 8, 10 der Fahrzeug-Vorderachse VA.

Das redundante Sekundär-Bremsregelsystem BRS2 weist baugleiche Komponenten wie das Primär-Bremsregelsystem BRS1 auf. Demnach ist das Sekundär-Bremsregelsystem BSR2 aus einem Sekundär-Steuergerät 13 und den insgesamt zwei elektromechanischen Sekundär-Aktuatoren 5 an der Hinterachse HA aufgebaut. Das Sekundär-Steuergerät 13 ist zudem mit Sekundär-Drehzahlsensoren 15 in Signalverbindung, die je Fahrzeugrad bereitgestellt sind. Ferner ist auch das Sekundär-Steuergerät 13 in Signalverbindung mit den beiden Hydraulik-Aktuatoren 8, 10 der Fahrzeug-Vorderachse VA.

Jeder der Hydraulik-Aktuatoren 8, 10 kann beispielhaft eine vom Steuergerät 9, 13 ansteuerbare, elektrisch betriebene Hydraulikpumpe aufweisen. Diese ist druckseitig über eine Bremsdruckleitung mit einem Hydraulikzylinder verbunden, mit dem der Bremssattel 2 der Fahrzeugrad-Bremse 1 in Druckanlage mit der Bremsscheibe 7 der Fahrzeugrad-Bremse 1 bringbar ist. Zur Steuerung des Bremsdrucks kann in der Bremsdruckleitung ein Hydraulik-Steuerventil angeordnet sein, das mit dem jeweiligen Steuergerät 9, 13 ansteuerbar ist.

Im normalen Fahrbetrieb werden auf der Grundlage einer, in einem Pilotsystem 17 (zum Beispiel ein Fahrerassistenzsystem mit ABS- und EPS-Funktionen) generierten Soll-Verzögerungsvorgabe V_{P} und/oder einer mittels eines Bremspedals 19 fahrerseitig generierten Soll-Verzögerungsvorgabe V_{B} im Primär-Steuergerät 9 Primär-Stellsignale y₁ erzeugt. Mit Hilfe der Primär-Stellsignale y₁ können die jeweiligen elektromechanischen Primär-Aktuatoren 3 der Hinterachse HA sowie die beiden Hydraulik-Aktuatoren 8, 10 der Vorderachse VA angesteuert werden, um diverse Brems- oder Lenkaufgaben wahrzunehmen.

Das Primär-Steuergerät 9 und das Sekundär-Steuergerät 13 werden jeweils von einem Primär-Bordnetz 31 und einem redundanten Sekundär-Bordnetz 33 voneinander unabhängig mit elektrischer Energie versorgt.

In der Figur ist das Bremspedal 19 Bestandteil einer Fußpedalsimulator-Einheit mit einem Drucksensor 21 und einem Wegsensor 23. Die Fußpedalsimulator-Einheit wandelt die von den beiden Sensoren 21, 23 erfasste Pedal-Bewegung in ein elektrisches Fußpedal-Signal um, das der fahrerseitig generierten Soll-Verzögerungsvorgabe V_{B} entspricht.

In der Figur ist zudem das Pilotsystem 17 mit einer Primär-Signalleitung 25 mit dem Primär-Steuergerät 9 in Signalverbindung, während das Pilotsystem 17 über eine davon unabhängige Sekundär-Signalleitung 27 mit dem Sekundär-Steuergerät 13 in Signalverbindung ist. Darüber hinaus sind die beiden Steuergeräte 9, 13 mittels einer Verbindungs-Signalleitung 29 miteinander verbunden. Über die Verbindungs-Signalleitung 29 können zwischen den beiden Steuergeräten 9, 13 Zustands-Informationen ausgetauscht werden.

In einem normalen Fahrbetrieb ist in der dargestellten Ausführungsvariante lediglich das Primär-Bremsregelsystem BRS1 im Einsatz, während das redundante Sekundär-Bremsregelsystem BRS2 deaktiviert ist. Sofern ein Diagnosemodul im Primär-Steuergerät 9 einen Fehlerfall im Primär-Bremsregelsystem BRS1 detektiert, wird ein Fehlersignal S_{F} generiert, das von dem Primär-Steuergerät 9 über die Verbindungs-Signalleitung 29 in das Sekundär-Steuergerät 13 ausgelesen wird. Daraufhin übernimmt das Sekundär-Bremsregelsystem BRS2 die Umsetzung der Soll-Verzögerungsvorgaben V_{P}, V_{B}.

Alternativ dazu kann bereits im normalen Fahrbetrieb sowohl das Primär-Bremsregelsystem BRS1 als auch das Sekundär-Bremsregelsystem BRS2 im Einsatz sein, sodass beide Bremsregelsystem im Parallelbetrieb arbeiten.

Darüber hinaus weisen die elektromechanischen Primär- und Sekundäraktuatoren 9, 13 jeweils eine Sperrfunktion auf, mittels der in einer Parksituation der jeweilige Aktuator 3, 5 das zugeordnete Fahrzeugrad durch Bremsbetätigung blockiert.

### BEZUGSZEICHENLISTE:

- 1: Fahrzeugrad-Bremse
- 2: Bremssattel
- 3, 5: Primär- und Sekundär-Aktuatoren
- 7: Bremsscheibe
- 8: Hydraulik-Aktuator
- 9: Primär-Steuergerät
- 8: Hydraulik-Aktuator
- 11: Primär-Drehzahlsensor
- 12: Hydraulik-Schaltkreis
- 13: Sekundär-Steuergerät
- 15: Sekundär-Drehzahlsensoren
- 17: Pilotsystem
- 19: Bremspedal
- 21: Drucksensor
- 23: Wegsensor
- 25: Primär-Signalleitung
- 27: Sekundär-Signalleitung
- 29: Verbindungs-Signalleitung
- 31: Primär-Bordnetz
- 33: Sekundär-Bordnetz
- S_{F}: Fehlersignal
- V_{P}, V_{B}: Soll-Verzögerungsvorgaben
- y₁, y₂: Stellsignale
- BRS1: Primär-Bremsregelsystem
- BRS2: Sekundär-Bremsregelsystem
- VA: Fahrzeug-Vorderachse
- HA: Fahrzeug-Hinterachse

## Patentansprüche

1. Bremssystem in einem zumindest teilweise autonomen Fahrzeug, mit einer Fahrzeugrad-Bremse (1) je Fahrzeugrad sowie mit einem Primär-Bremsregelsystem (BRS1) und einem redundanten Sekundär-Bremsregelsystem (BRS2), **dadurch gekennzeichnet, dass** in einer ersten Fahrzeugachse je Fahrzeugrad ein Hydraulik-Aktuator (8, 10) zur Betätigung der Fahrzeugbremse (1) bereitgestellt ist, der sowohl dem Primär-Bremsregelsystem (BRS1) als auch dem Sekundär-Bremsregelsystem (BRS2) zugeordnet ist, und dass in der zweiten Fahrzeugachse je Fahrzeugrad ein elektromechanischer, das heißt hydraulikfrei arbeitender Primär-Aktuator (3), der dem Primär-Bremsregelsystem (BRS1) zugeordnet ist, und ein elektromechanischer, das heißt hydraulikfrei arbeitender Sekundär-Aktuator (5) bereitgestellt ist, der dem Sekundär-Bremsregelsystem (BRS2) zugeordnet ist.

2. Bremssystem nach Anspruch 1, **dadurch gekennzeichnet, dass** das Primär-Bremsregelsystem (BRS1) ein Primär-Steuergerät (9) aufweist, und dass auf der Grundlage einer in einem Pilotsystem (17) generierten Soll-Verzögerungsvorgabe (V_{P}) und/oder einer mittels eines Bremspedals (19) fahrerseitig generierten Soll-Verzögerungsvorgabe (V_{B}) das Primär-Steuergerät (9) Primär-Stellsignale (y₁) erzeugt, mit denen die Hydraulik-Aktuatoren (8, 10) und die elektromechanischen Primär-Aktuatoren (3) ansteuerbar sind, und dass das Sekundär-Bremsregelsystem (BRS2) ein Sekundär-Steuergerät (13) aufweist, und dass auf der Grundlage einer in dem Pilotsystem (17) generierten Soll-Verzögerungsvorgabe (V_{P}) und/oder einer mittels des Bremspedals (19) fahrerseitig generierten Soll-Verzögerungsvorgabe (V_{B}) das Sekundär-Steuergerät (13) Sekundär-Stellsignale (y₂) erzeugt, mit denen die Hydraulik-Aktuatoren (8, 10) und die elektromechanischen Sekundär-Aktuatoren (5) ansteuerbar sind.

3. Bremssystem nach einem der vorhergehenden Ansprüche, **dadurch gekennzeichnet, dass** die beiden Hydraulik-Aktuatoren (8, 10) über einen Hydraulik-Schaltkreis (12) miteinander verbunden sind, mittels dem bei Ausfall des einen Hydraulik-Aktuators (8) der andere, noch funktionsfähige Hydraulik-Aktuator (10) die Brems- und/oder Lenkaufgaben für beide Fahrzeugrad-Bremsen (1) der ersten Fahrzeugsachse (VA) übernimmt.

4. Bremssystem nach einem der vorhergehenden Ansprüche, **dadurch gekennzeichnet, dass** das Bremspedal (19) Bestandteil einer Fußpedalsimulator-Einheit mit zumindest einem Pedalsensor (21, 23) ist, und dass die Fußpedalsimulator-Einheit die mechanische Pedal-Bewegung in ein elektrisches Fußpedal-Signal umwandelt, das die fahrerseitig generierte Soll-Verzögerungsvorgabe (V_{B}) ist.

5. Bremssystem nach einem der Ansprüche 2 bis 4, **dadurch gekennzeichnet, dass** ein Primär-Bordnetz (31) und ein redundantes Sekundär-Bordnetz (33) bereitgestellt sind, die voneinander unabhängig jeweils das Primär-Steuergerät (9) und das Sekundär-Steuergerät (13) mit elektrischer Energie versorgen.

6. Bremssystem nach einem der Ansprüche 2 bis 5, **dadurch gekennzeichnet, dass** jedem Fahrzeugrad (HR, HL, VR, VL) ein Primär-Drehzahlsensor (11) und ein Sekundär-Drehzahlsensor (15) zugeordnet ist, die jeweils mit dem Primär-Steuergerät (9) und mit dem Sekundär-Steuergerät (13) in Signalverbindung sind.

7. Bremssystem nach einem der Ansprüche 2 bis 6, **dadurch gekennzeichnet, dass** das Pilotsystem (17) über eine Primär-Signalleitung (25) mit dem Primär-Steuergerät (9) in Signalverbindung ist, und dass das Pilotsystem (17) über eine davon unabhängige Sekundär-Signalleitung (27) mit dem Sekundär-Steuergerät (13) in Signalverbindung ist.

8. Bremssystem nach einem der Ansprüche 2 bis 7, **dadurch gekennzeichnet, dass** zwischen dem Primär-Steuergerät (9) und dem Sekundär-Steuergerät (13) eine Verbindungs-Signalleitung (29) verlegt ist, über die Zustands-Informationen zwischen den Steuergeräten (9, 13) austauschbar sind, und dass in einem Fehlerfall im Primär-Bremsregelsystem (BRS1) das Primär-Steuergerät (9) ein Fehlersignal (S_{F}) generiert, mit dem über die Verbindungs-Signalleitung (29) das Sekundär-Steuergerät (13) aktivierbar ist, so dass anstelle des Primär-Bremsregelsystems (BRS1) das Sekundär-Bremsregelsystem (BRS2) die Umsetzung der Soll-Verzögerungsvorgabe (V_{B}, V_{P}) übernimmt.

9. Bremssystem nach einem der Ansprüche 1 bis 7, **dadurch gekennzeichnet, dass** im normalen Fahrbetrieb sowohl das Primär-Bremsregelsystem (BRS1) als auch das Sekundär-Bremsregelsystem (BRS2) im Einsatz sind, so dass beide Bremsregelsysteme (BRS1, BRS2) im Parallelbetrieb arbeiten.

10. Bremssystem nach einem der vorhergehenden Ansprüche, **dadurch gekennzeichnet, dass** zumindest einer der elektromechanischen Aktuatoren (3, 5) eine Sperrfunktion aufweist, mittels der in einer Parksituation der Aktuator (3, 5) durch Bremsbetätigung das zugeordnete Fahrzeugrad (VL, VR, HR, HL) blockiert.

## Claims

1. A braking system in an at least partially autonomous vehicle, with one vehicle wheel brake (1) per vehicle wheel, a primary brake regulation system (BRS1), and a redundant secondary brake regulation system (BRS2), **characterised in that** one hydraulic actuator (8, 10) for actuating the vehicle brake (1) is provided per vehicle wheel in a first vehicle axle, which actuator is assigned to both the primary brake regulation system (BRS1) and the secondary brake regulation system (BRS2), and one electromechanical, i.e. hydraulics-free, primary actuator (3) per vehicle wheel is assigned to the primary brake regulation system (BRS1) in the second vehicle axle, and one electromechanical, i.e. hydraulics-free, secondary actuator (5) is provided, which is assigned to the secondary brake regulation system (BRS2).

2. The braking system according to claim 1, **characterised in that** the primary brake regulation system (BRS1) has a primary control device (9), and the primary control device (9) generates primary positioning signals (y₁) on the basis of a setpoint deceleration specification (V_{P}) generated in a pilot system (17) and/or a setpoint deceleration specification (V_{B}) generated on the part of the driver by means of a brake pedal (19), with which positioning signals the hydraulic actuators (8, 10) and the electromechanical primary actuators (3) are activatable, and that the secondary brake regulation system has a secondary control device (13), and the secondary control device (13) generates secondary positioning signals (y₂) on the basis of a setpoint deceleration specification (V_{P}) generated in a pilot system (17) and/or a setpoint deceleration specification (V_{B}) generated on the part of the driver by means of the brake pedal (19), with which positioning signals the hydraulic actuators (8, 10) and the electromechanical secondary actuators (5) are activatable.

3. The braking system according to any one of the preceding claims, **characterised in that** the two hydraulic actuators (8, 10) are connected to one another via a hydraulic circuit (12) by means of which, in the event of failure of one hydraulic actuator (8), the other, still functional hydraulic actuator (10) takes over the braking and/or steering tasks for both vehicle wheel brakes (1) of the first vehicle axle (VA).

4. The braking system according to any one of the preceding claims, **characterised in that** the brake pedal (19) is a component of a foot pedal simulator unit with at least one pedal sensor (21, 23), and that the foot pedal simulator unit converts the mechanical pedal movement into an electrical foot pedal signal which is the setpoint deceleration specification (V_{B}) generated on the part of the driver.

5. The braking system according to any one of claims 2 to 4, **characterised in that** a primary vehicle electrical system (31) and a redundant secondary vehicle electrical system (33) are provided which each supply the primary control device (9) and the secondary control device (13) with electrical energy independently of one another.

6. The braking system according to any one of claims 2 to 5, **characterised in that** each vehicle wheel (HR, HL, VR, VL) is assigned a primary speed sensor (11) and a secondary speed sensor (15), which each have a signal connection to the primary control device (9) and to the secondary control device (13).

7. The braking system according to any one of claims 2 to 6, **characterised in that** the pilot system (17) has a signal connection to the primary control device (9) via a primary signal line (25), and that the pilot system (17) has a signal connection to the secondary control device (13) via a secondary signal line (27) independent thereof.

8. The braking system according to any one of claims 2 to 7, **characterised in that,** between the primary control device (9) and the secondary control device (13), a connecting signal line (29) is laid via which items of status information are exchangeable between the control devices (9, 13), and that in case of an error in the primary brake regulation system (BRS1), the primary control device (9) generates an error signal (S_{F}) through which the secondary control device (13) is activatable via the connecting signal line (29), such that in place of the primary brake regulation system (BRS1), the secondary brake regulation system (BRS2) takes over the implementation of the setpoint deceleration specification (V_{B}, V_{P}).

9. The braking system according to any one of claims 1 to 7, **characterised in that** in normal driving operation, both the primary brake regulation system (BRS1) and the secondary brake regulation system (BRS2) are in use, such that the two brake regulation systems (BRS1, BRS2) operate in parallel.

10. The braking system according to any one of the preceding claims, **characterised in that** at least one of the electromechanical actuators (3, 5) has a blocking function by means of which, in a parking situation, the actuator (3, 5) blocks the assigned vehicle wheel (VL, VR, HR, HL) by brake actuation.

## Revendications

1. Système de freinage dans un véhicule au moins partiellement autonome, avec un frein de roue de véhicule (1) par roue de véhicule ainsi qu'avec un système de régulation de freinage primaire (BRS1) et un système de régulation de freinage secondaire redondant (BRS2), **caractérisé en ce que** dans un premier essieu de véhicule, un actionneur hydraulique (8, 10) est mis à disposition par roue de véhicule pour l'actionnement du frein de véhicule (1), actionneur qui est associé aussi bien au système de régulation de freinage primaire (BRS1) qu'au système de régulation de freinage secondaire (BRS2), et **en ce que**, dans le second essieu de véhicule, un actionneur primaire (3) électromécanique, c'est-à-dire fonctionnant sans hydraulique, qui est associé au système de régulation de freinage primaire (BRS1), et un actionneur secondaire (5) électromécanique, c'est-à-dire fonctionnant sans hydraulique, qui est associé au système de régulation de freinage secondaire (BRS2), est mis à disposition par roue de véhicule.

2. Système de freinage selon la revendication 1, **caractérisé en ce que** le système de régulation de freinage primaire (BRS1) présente un dispositif de commande primaire (9), et **en ce que**, sur la base d'une spécification de ralentissement de consigne (V_{B}) générée dans un système pilote (17) et/ou d'une spécification de ralentissement de consigne (V_{B}) générée côté conducteur au moyen d'une pédale de frein (19), le dispositif de commande primaire (9) génère des signaux de positionnement primaires (y₁) avec lesquels les actionneurs hydrauliques (8, 10) et les actionneurs primaires électromécaniques (3) peuvent être commandés, et **en ce que** le système de régulation de freinage secondaire (BRS2) présente un dispositif de commande secondaire (13), et **en ce que** sur la base d'une spécification de ralentissement de consigne (V_{B}) générée dans le système pilote (17) et/ou d'une spécification de ralentissement de consigne (V_{B}) générée côté conducteur au moyen de la pédale de frein (19), le dispositif de commande secondaire (13) génère des signaux de positionnement secondaires (y₂) avec lesquels les actionneurs hydrauliques (8, 10) et les actionneurs secondaires électromécaniques (5) peuvent être commandés.

3. Système de freinage selon l'une quelconque des revendications précédentes, **caractérisé en ce que** les deux actionneurs hydrauliques (8, 10) sont connectés entre eux par l'intermédiaire d'un circuit hydraulique (12) au moyen duquel, en cas de défaillance de l'un actionneur hydraulique (8), l'autre actionneur hydraulique (10) encore fonctionnel prend en charge les tâches de freinage et/ou de direction pour les deux freins de roues de véhicule (1) du premier essieu de véhicule (VA).

4. Système de freinage selon l'une quelconque des revendications précédentes, **caractérisé en ce que** la pédale de frein (19) fait partie d'une unité de simulateur de pédale de pied avec au moins un capteur de pédale (21, 23), et **en ce que** l'unité de simulateur de pédale de pied convertit le mouvement de pédale mécanique en un signal de pédale de pied électrique qui est la spécification de ralentissement de consigne (V_{B}) générée par le conducteur.

5. Système de freinage selon l'une quelconque des revendications 2 à 4, **caractérisé en ce qu'**un réseau de bord primaire (31) et un réseau de bord secondaire redondant (33) sont prévus, lesquels alimentent indépendamment l'un de l'autre respectivement le dispositif de commande primaire (9) et le dispositif de commande secondaire (13) en énergie électrique.

6. Système de freinage selon l'une quelconque des revendications 2 à 5, **caractérisé en ce que** chaque roue de véhicule (HR, HL, VR, VL) se voit associée à un capteur de vitesse primaire (11) et à un capteur de vitesse secondaire (15) qui sont respectivement en liaison de signal avec le dispositif de commande primaire (9) et avec le dispositif de commande secondaire (13).

7. Système de freinage selon l'une quelconque des revendications 2 à 6, **caractérisé en ce que** le système pilote (17) est en liaison de signal avec le dispositif de commande primaire (9) par l'intermédiaire d'une ligne de signaux primaire (25), et **en ce que** le système pilote (17) est en liaison de signal avec le dispositif de commande secondaire (13) par l'intermédiaire d'une ligne de signaux secondaire (27) qui en est indépendante.

8. Système de freinage selon l'une quelconque des revendications 2 à 7, **caractérisé en ce qu'**une ligne de signaux de connexion (29) est posé entre le dispositif de commande primaire (9) et le dispositif de commande secondaire (13), par l'intermédiaire duquel des informations d'état peuvent être échangées entre les dispositifs de commande (9, 13), et **en ce que**, en cas d'erreur dans le système de régulation de freinage primaire (BRS1), le dispositif de commande primaire (9) génère un signal d'erreur (S_{F}) avec lequel le dispositif de commande secondaire (13) peut être activé par l'intermédiaire de la ligne de signaux de connexion (29), de sorte que le système de régulation de freinage secondaire (BRS2) prend en charge la mise en oeuvre de la spécification de ralentissement de consigne (V_{B}, V_{P}) à la place du système de régulation de freinage primaire (BRS1).

9. Système de freinage selon l'une quelconque des revendications 1 à 7, **caractérisé en ce qu'**en mode de conduite normal, aussi bien le système de régulation de freinage primaire (BRS1) que le système de régulation de freinage secondaire (BRS2) sont utilisés, de sorte que les deux systèmes de régulation de freinage (BRS1, BRS2) fonctionnent en parallèle.

10. Système de freinage selon l'une quelconque des revendications précédentes, **caractérisé en ce qu'**au moins un des actionneurs électromécaniques (3, 5) présente une fonction de verrouillage au moyen de laquelle, dans une situation de stationnement, l'actionneur (3, 5) bloque la roue de véhicule associée (VL, VR, HR, HL) par actionnement de frein.
